# EUROPÄISCHE PATENTSCHRIFT

(11) **EP 0 334 030 B1**
(45) Veröffentlichungstag und Bekanntmachung des Hinweises auf die Patenterteilung: **27.10.1993**
(21) Anmeldenummer: 89102951.4
(22) Anmeldetag: 21.02.1989
(51) Int. Cl.: G05D 16/20

(54) **Regeleinrichtung für einen Druckregelkreis**
Regulating device for a pressure regulation circuit
Régulateur pour un circuit de régulation de pression

(30) Priorität: 25.03.1988 DE 3810111
(43) Veröffentlichungstag der Anmeldung: 27.09.1989
(73) Patentinhaber: ROBERT BOSCH GMBH, 70442 Stuttgart (DE)
(72) Erfinder: Erhard, Norbert, Dipl.-Ing., D-8520 Erlangen (DE); Pfuhl, Berthold, Dipl.-Ing., D-7145 Markgröningen (DE)

(56) Entgegenhaltungen:
- DE-A- 3 134 065
- DE-A- 3 418 969
- DE-A- 3 620 195
- FR-A- 2 582 827

## Beschreibung

Die Erfindung betrifft eine Regeleinrichtung für einen Druckregelkreis gemäß der Gattung des Anspruchs 1.

Zur Regelung des Drucks in einem Verbraucher ist es bekannt, ein lagegeregeltes, ein- oder mehrstufiges, stetig verstellbares Ventil zu verwenden, das einen Ölstrom in den Verbraucher steuert. Der Druck im Verbraucher wird dabei gemessen, in ein proportionales Spannungssignal gewandelt und einem Regler zugeführt. Dort wird der Vergleich zwischen Sollwert und Istwert vorgenommen und entsprechend der verwendeten Reglerdynamik verarbeitet und als Stellsignal an den Eingang des lagegeregelten Ventils geführt. Als Regler werden dazu an sich bekannte Reglertypen, wie P-Regler, PI-Regler, PD-Regler und PID-Regler eingesetzt. Die Einstellparameter dieser konvenionellen Regler reichen aber oft nicht aus, um die aus Ventil und Verbraucher bestehende Regelstrecke hinreichend gut zu regeln.

Mit konventionellen Reglern gestaltet sich die Druckregelung häufig deshalb sehr schwierig, weil das Volumen, in welchem der Druck geregelt wird, im allgemeinen stark schwankt oder nicht hinreichend bekannt ist. Außerdem sind die Ölströme in dieses Volumen sehr stark druckabhängig, so daß die unterschiedlich benötigten Ölmengen bei entsprechend gewünschten Druckanstiegsdynamiken sowohl einstufige als auch zweistufige Ventile nötig machen. Konventionelle Reglertypen reichen wegen der Regelstreckenordnung und deren stark nicht linearen Charakters oft nicht aus, um ein gut gedämpftes aber dennoch dynamisches Übergangsverhalten bei sprunghafter Sollwertänderung zu erzielen. Selbst bei einem einstufigen Ventil kann mit den zwei voneinander unabhängigen Regelparametern, wie Proportionalverstärkung und Vorhalt-Zeitkonstante, eine Strecke der dritten Ordnung nicht derart beeinflußt werden, daß eine dynamische und dennoch asymptotische Streckenreaktion auf sprungförmige Sollwertänderungen erhalten wird.

### Vorteile der Erfindung

Die erfindungsgemäße Regeleinrichtung für einen Druckregelkreis der eingangs genannten Gattung hat mit den kennzeichnenden Merkmalen des Anspruchs 1 demgegenüber den Vorteil, daß aufgrund der Berücksichtigung der Zustandsgrößen des ein-oder mehrstufigen Stetigventils und des im Verbrauchervolumen auftretenden Drucks in einem Zustandsregler, die Dynamik der Regelung vergrößert und gleichzeitig das Regelverhalten stabiler wird. Zudem ist der Schaltungsaufwand gering und eine Anpassung an unterschiedliche Regelstrecken einfach durchführbar.

Durch die in den abhängigen Ansprüchen aufgeführten Maßnahmen sind vorteilhafte Weiterbildungen und Verbesserungen der im Anspruch 1 angegebenen Regeleinrichtung möglich. Eine besonders vorteilhafte Ausführung ergibt sich dann, wenn als Lageregler für eine erste Stufe des Ventils ein an sich bekannter PID-Regler (DE-A1-34 18 969) verwendet wird, dessen Proportionalglied und Integrierglied eingangsseitig verbunden sind und den Sollwerteingang des PID-Reglers bilden. Weiter ist das Lagesignal der ersten Ventilstufe als Istwertsignal dem Proportional-, Integral- und Differenzierglied zugeführt. Bei Verwendung eines solchen Reglers werden die für den Zustandsregler erforderlichen Zustandsgrößen ohne weitere Maßnahmen zur Verfügung gestellt, so daß der Schaltungsaufwand hier minimal wird.

### Zeichnung

Es zeigen
- Figur 1: die Darstellung eines konventionellen Druckregelkreises nach dem Stand der Technik,
- Figur 2: eine Lageregelung eines einstufigen Ventils,
- Figur 3: eine Lageregelung eines zweistufigen Ventils,
- Figur 4: ein Schema einer Zustandsregelung in allgemeiner Form für einen Druckregelkreis mit einem lagegeregelten ein- oder mehrstufigen Ventil,
- Figur 5a bis 5d: Schemadarstellungen für die unterschiedlichen Möglichkeiten zur Erzeugung der Signale von notwendigen Zustandsgrößen,
- Figur 6: die Ausführung eines Zustandsreglers bei einem zweistufigen Ventil mit Vor- und Hauptstufe unter Verwendung eines an sich bekannten Lagereglers für die Vorstufe.

### Beschreibung von Ausführungsbeispielen

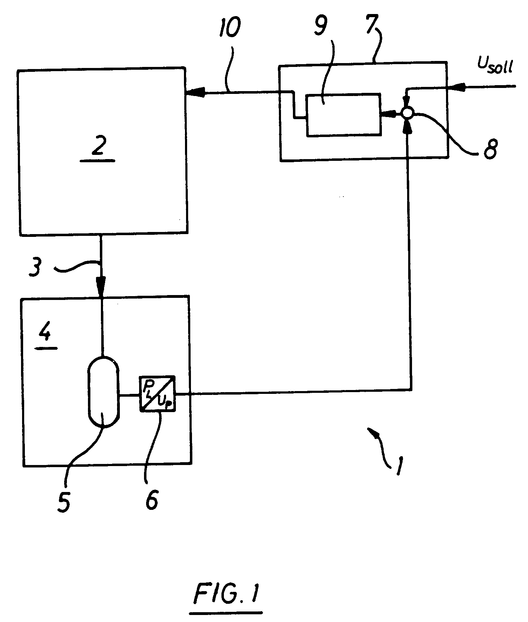

In Figur 1 ist ein konventioneller Druckregelkreis 1 dargestellt mit einem lagegeregelten ein- oder mehrstufigen, stetig verstellbaren Ventil 2 als Stellglied, das einen Ölstrom 3 zu einem Verbraucher 4 steuert. Der Verbraucher ist schematisch als Behälter 5 dargestellt, in dem der Druck auf einen bestimmten Sollwert geregelt werden soll. Im Behälter 5 wird der Druck gemessen und über einen Meßumformer 6 in ein elektrisches Druck-Istwertsignal Uₚ umgeformt. Dieses Druck-Istwertsignal Uₚ wird einem Druckregler zusammen mit einem Druck-Sollwertsignal U_{Soll} zugeführt. Der Druckregler 7 enthält eine Vergleicherschaltung 8, in der der Soll-Istwertvergleich durchgeführt wird und einen Schaltungsteil 9, in dem beispielsweise das bekannte PID-Verhalten erzeugt wird. Der Ausgang des Druckreglers ist über die Signalleitung 10 mit dem lagegeregelten Ventil 2 verbunden.

Eine solche konventionelle Anordnung führt oft zu Einstellproblemen bei unterschiedlichen Verbrauchern und zu einer ungenügenden Dämpfung, Stabilität und Dynamik.

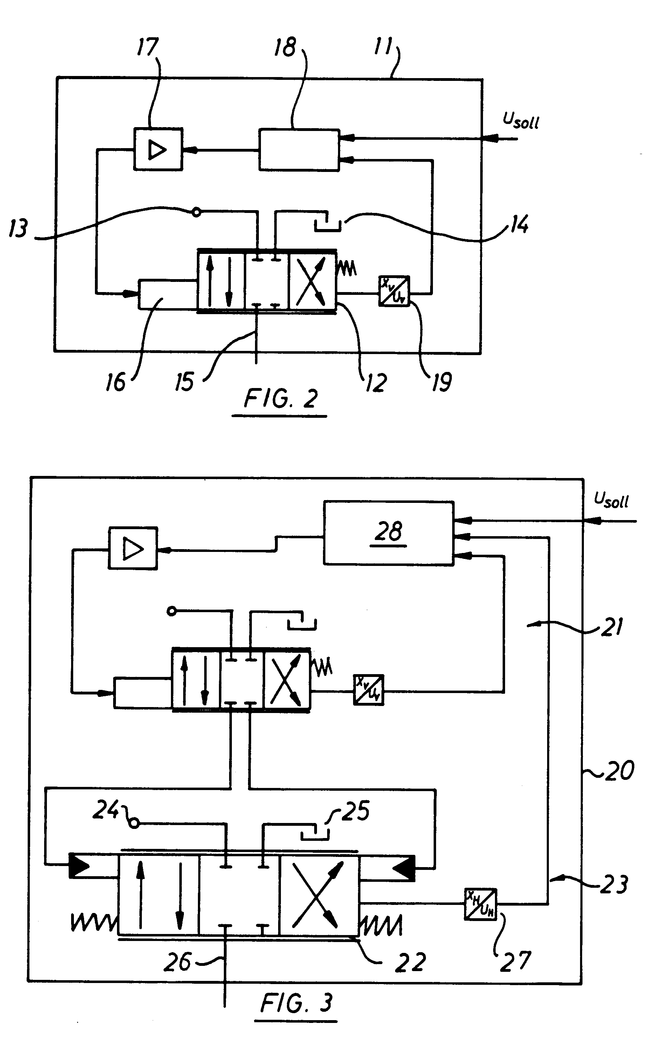

In Figur 2 ist ein einstufiges, lagegeregeltes Ventil 11 dargestellt: Ein Proportionalventil 12 ist eingangsseitig an eine (schematisch dargestellte) Versorgungspumpe 13 und einen Tank 14 und ausgangsseitig über eine Leitung 15 direkt mit einem Verbraucher verbunden. Das Proportionalventil 12 wird über einen Elektromagnet 16 gesteuert, der über eine Endstufe 17 mit dem Ausgang eines Lagereglers 18 verbunden ist. Die Lage des beweglichen Teils, beispielsweise eines Ventilschiebers im Proportionalventil 12 wird durch einen Wegaufnehmer 19 ermittelt, der die Weggröße Xᵥ in ein entsprechendes, elektrisches Lagesignal U_{V} umsetzt. Dieses Lagesignal U_{V} wird als Istwertsignal dem Lageregler 18 zugeführt, zusätzlich mit einem Sollwertsignal U_{Soll}.

In Figur 3 ist ein zweistufiges Ventil 20 dargestellt, in dem das einstufige Ventil 11 nach Figur 2 als Vorstufe 21 verwendet ist. Am Ausgang des Proportionalventils 12 ist hierbei ein hydraulisch betätigbares, weiteres Proportionalventil 22 als Hauptstufe 23 angeschlossen. Eingangsseitig ist das Hauptstufen-Proportionalventil 22 an eine Hauptstufen-Versorgungspumpe 24 und einen Tank 25 und über eine Ausgangsleitung 26 an einen Verbraucher angeschlossen. Über einen weiteren Wegaufnehmer 27 wird die Lage des Stellteils im Ventil 22 bzw. eine Weggröße X_{H} ermittelt und in ein Lagesignal U_{H} für die Hauptstufe umgesetzt. Dieses Lagesignal U_{H} wird als weiteres Istwertsignal einem Lageregler 28, der für die zweistufige Regelung ausgelegt ist, zugeführt.

Bei Proportionalventilen mit größeren Volumenströmen ist die Stellkraft aufgrund der Strömungs- und Reibungskraft so groß, daß eine direkte Betätigung über einen Magnet entsprechend Figur 1 nicht mehr möglich ist. Aus diesem Grund werden beispielsweise zweistufige Ventile gemäß Figur 3 verwendet, bei denen ein Hauptstufenventil durch ein Vorstufenventil kleiner Nennweite vorgesteuert ist.

Aus den Figuren 2 und 3 ist zu erkennen, wie sich die Reihe zu einem mehrstufigen Ventil mit weiteren Ventilstufen fortsetzt. Beispielsweise wäre für ein dreistufiges Ventil dann an das Proportionalventil 22 ein weiteres Ventil angeschlossen.

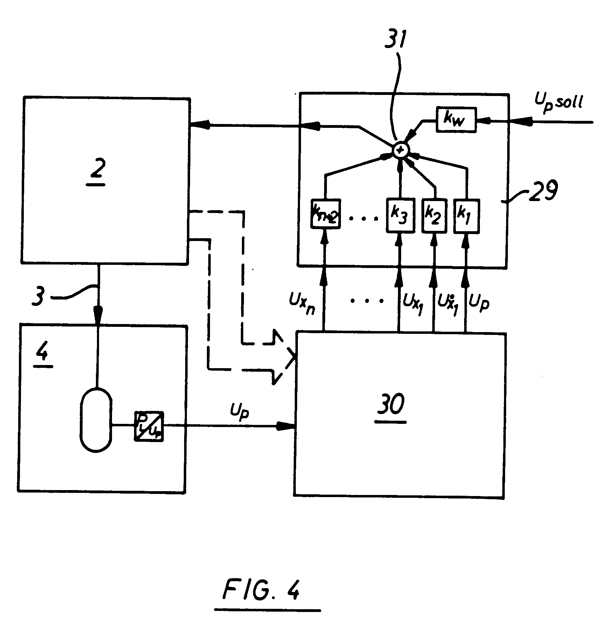

In Figur 4 ist das Schema einer Zustandsregelung in seiner allgemeinen Form für den Druckregelkreis dargestellt mit einem lagegeregelten ein- oder mehrstufigen Ventil 2, an das, wie in Figur 1, über eine Ölstromleitung 3 ein Verbraucher 4 angeschlossen ist. Für die Regelung ist ein Zustandsregler 29 verwendet, der im Druckregelkreis eine größere Möglichkeit bietet, auf die Streckendynamik Einfluß zu nehmen. Dazu ist es nötig, sämtliche systemrelevanten Größen zugänglich zu machen.

Diese Zustandsgrößen werden zunächst über die Systembeschreibung bestimmt:

Es geht dabei der Druck P_{L} im Verbraucher bzw. das Druck-Istwertsignal Uₚ ein.

Weiter geht jede systemrelevante Größe des lagegeregelten Ventils ein. Bei einstufigen Ventilen erhält man im allgemeinen eine hinreichende Systembeschreibung durch ein PT₂ verhalten, wobei als Zustandsgrößen die Lage des Ventils und die Geschwindigkeit der Lageveränderung des Ventils erforderlich sind.

Bei zwei- oder allgemein mehrstufigen Ventilen stellt sich jede mechanische Stufe als ein zur Vorstufe (1. Stufe) in Reihe geschaltetes, integrierendes System dar. Durch dieses integrierende Verhalten wird eine systemtechnisch hinreichende Beschreibung erhalten. Dieses System ist über den Lageregler gegengekoppelt. Dies bedeutet, daß jede weitere Stufe eine Verzögerung zum PT₂-System der ersten Stufe (Vorstufe) bringt. Folglich erhöht sich die Anzahl der Zustandsgrößen für jede weitere Stufe um eine Zustandsgröße gegenüber dem Fall des einstufigen Ventils. Die zusätzliche Zustandsgröße repräsentiert die Lage der nächsten Stufe. Als Zustandsgrößen sind somit erforderlich: die Lage und die Geschwindigkeit der ersten Stufe, die Lage der zweiten Stufe, die Lage der dritten Stufe, usw., je nach Anzahl der Ventilstufen.

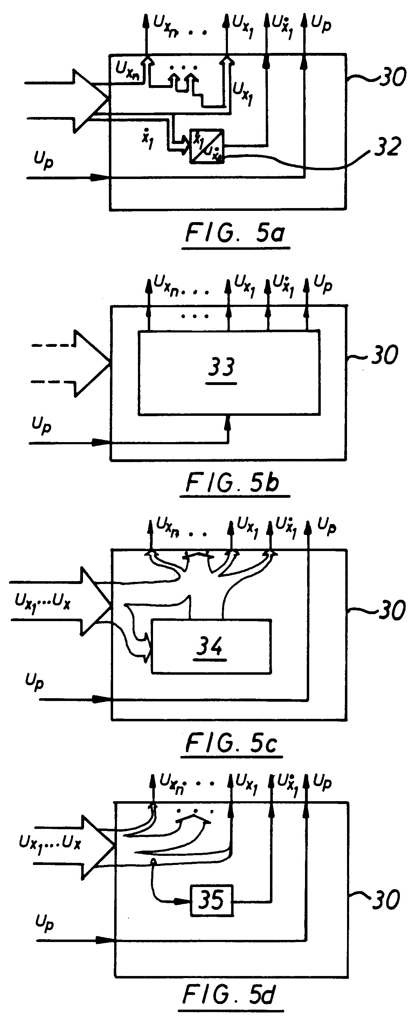

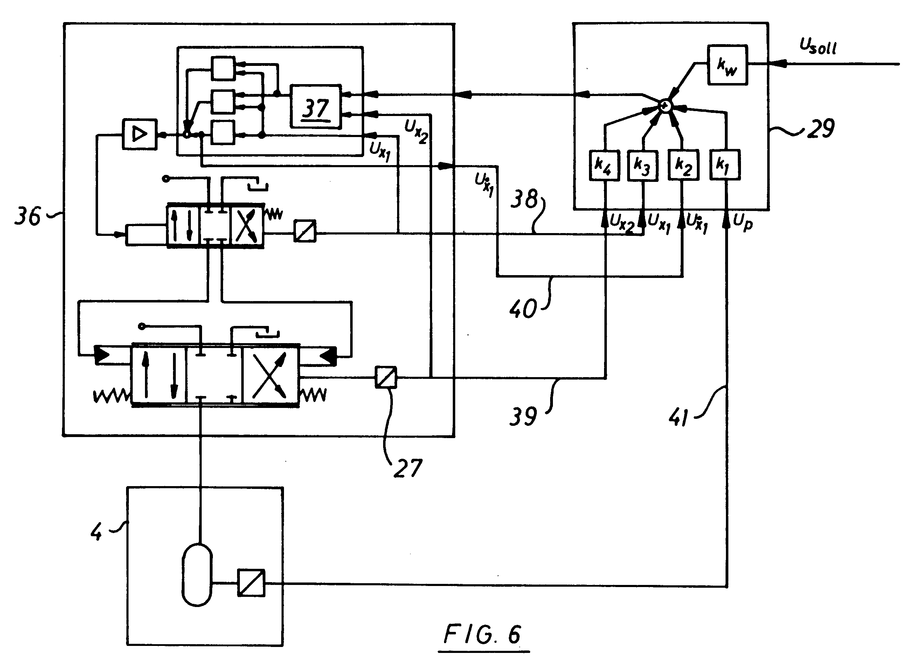

Diese Zustandsgrößen bzw. ihre Signalgrößen sind für den Druck mit Uₚ, für die Geschwindigkeit der ersten Stufe mit U 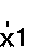 und für die Lage der einzelnen Ventilstufen mit Uₓ₁ ... Uₓₙ in Figur 4 bezeichnet. Die Zustandsgrößen-Signale werden von der Schaltungseinheit 30 zur Verfügung gestellt, die Möglichkeiten dafür werden anhand der Figuren 5 und 6 nähert erläutert. Im Zustandsregler 29 sind Gewichtungsschaltungen k₁ bis kₙ₊₂ enthalten, mit denen die Zustandsgrößensignale gegeneinander gewichtet werden können. Weiter ist eine Gewichtungsschaltung k_{W} für den Drucksollwert U_{Soll} enthalten. Alle gewichteten Signale werden einer Verknüfungsschaltung 31 zugeführt. Entsprechend dem Regelsinn werden die Zustandsgrößen der Regelstrecke im allgemeinen im Sinne einer Gegenkopplung in die Verknüpfung eingebracht.

Die Realisierung der Zustandsgrößenrückführung wird in Figur 4 durch die Einheit 30 angedeutet. Wie aus den vorstehenden Ausführungen hervorgeht, hängt das Aussehen der Zustandsgrößenrückführung stark von der Strecke und damit dem verwendeten Ventil (z. B. ein- oder mehrstufig) ab, aber auch von der Art der Zustandsgrößengewinnung.

Die Gewinnung oder Generierung der Zustandsgrößen kann auf unterschiedliche Weise erfolgen, wie dies anhand der Figuren 5 dargestellt ist.

Gemäß Figur 5a werden alle Zustandsgrößen meßtechnisch erfaßt mit dem zusätzlichen Aufwand eines Geschwindigkeitssensors 32.

Gemäß Figur 5b werden die Zustandsgrößen mit Hilfe eines Zustandsgrößenbeobachters 33 nur aus dem Drucksignal ermittelt. Die meßtechnische Erfassung der Lage- bzw. des Geschwindigkeitssignals ist hierbei nicht erforderlich.

Gemäß Figur 5c wird ein "reduzierter Zustandsgrößenbeobachter" 34 eingesetzt, wobei das Drucksignal und das oder die Lagesignale des Ventils verwendet werden.

Gemäß Figur 5d werden das Drucksignal und die Lagesignale gemessen und durch differenzieren des Lagesignals der ersten Stufe in einem Differenzierglied 35 das erforderliche Geschwindigkeitssignal erhalten.

In Figur 6 ist das Schema einer Zustandsregelung mit einem zweistufigen, lagegeregelten Ventil 36 dargestellt, dem wiederum der Verbraucher 4 nachgeschaltet ist. Weiter ist der Zustandsregler 29 entsprechend Figur 4 für die Eingänge Uₚ, U 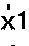 , Uₓ₁ und Uₓ₂ (für ein zweistufigen Ventil) verwendet.

Besonders einfach wird die Anordnung nach Figur 6 dadurch, daß als Lageregler für die erste Stufe bzw. die Vorstufe des zweistufigen Ventils 36 ein an sich bekannter Lageregler (nach DE-OS 34 18 969) verwendet wird. Das Lagesignal U_{V} bzw. Uₓ₁ des Vorstufenventils wird als Lage-Istwertsignal allen drei Gliedern des PID-Reglers über deren verbundene Istwertengänge zugeführt. Die Sollwerteingänge des Proportional-und Integralgliedes sind ebenfalls zu einem gemeinsamen Sollwerteingang verbunden, dem der Ausgang des Hauptstufenreglers 37 zugeführt ist. Eingangsseitig ist der Hauptstufenregler 37 sowohl mit dem Ausgang des Zustandsreglers 29 als auch mit dem Wegaufnehmer 27 bzw. mit der Leitung für das Lagesignal U_{H} bwz. Uₓ₂ der Hauptstufe verbunden.

Die Lagesignale Uₓ₁ und Uₓ₂ für die Vorstufe und die Hauptstufe werden somit ohnehin für die Lageregelung erfaßt und stehen somit auch für den Anschluß an den Zustandsregler über die Leitungen 38 und 39 ohne größeren weiteren Aufwand zur Verfügung.

Ebenso verhält es sich mit dem Geschwindigkeitssignal U 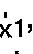 , das nach dem Differenzierglied ohne zusätzliche Maßnahmen ohnehin anliegt und über die Leitung 40 dem Zustandsregler zugeführt ist.

Weiter ist der Druckistwert Uₚ über die Leitung 41 an den Zustandsregler 29 angeschlossen.

Diese Anordnung unter Verwendung des bekannten Lagereglers führt somit dazu, daß die benötigten Zustandsgrößen ohne weiteren Aufwand ohnehin vorliegen und somit die Schaltungseinheit 30 nach Figur 4 oder den Figuren 5 entfallen kann. Somit wird eine hardwaremäßige Minimalkonfiguration erhalten.

## Patentansprüche

1. Regeleinrichtung für einen Druckregelkreis, mit einem lagegeregelten, wenigstens einstufigen, stetig verstellbaren Ventil, mit einem an das Ventil angeschlossenen Verbraucher, dessen Druck geregelt werden soll, mit einem Druckaufnehmer am Verbraucher zur Erzeugung eines Druck-Istwertsignals und mit einem Regler, dem das Druck-Istwertsignal und ein Druck-Sollwertsignal zugeführt sind und dessen Ausgang mit dem Regeleingang des lagegeregelten Ventils verbunden ist, dadurch gekennzeichnet, daß der Regler als Zustandsregler (29) ausgeführt ist, dem das Druck-Sollwertsignal (U_{Soll}) und als Zustandsgrößen der Regelstrecke das Druck-Istwertsignal (Uₚ) und weiter ein Lage- bzw. Stellungssignal (U_{V} bzw. Uₓ₁) sowie ein Geschwindigkeitssignal (U 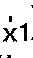 ) für eine Lageveränderung der ersten Ventilstufe und gegebenenfalls ein Lagesignal (Uₓ₂ ... Uₓₙ) für jeweils jede weitere Stufe zugeführt sind, daß zumindest ein Teil dieser Signale (U_{Soll}, Uₚ, U 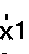 , Uₓ₁ ... Uₓₙ) an Gewichtungsschaltungen (K_{W}, K₁ ... Kₙ₊₂) angeschlossen ist, um die Signale (U_{Soll}, Uₚ, U 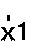 ... Uₓₙ) gegeneinander zu wichten, daß diese Signale (U_{Soll}, Uₚ, U 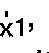 , Uₓ₁ ... Uₓₙ) bzw. die über die Gewichtungsschaltungen (K_{W}, K₁ ... Kₙ₊₂) gewichteten Signale einer Verknüpfungsschaltung (31) zugeführt sind und daß der Ausgang der Verknüpfungsschaltung (31) als Ausgang des Zustandsreglers (29) mit dem Regeleingang des lagegeregelten Ventils (2) verbunden ist.

2. Regeleinrichtung nach Anspruch 1, dadurch gekennzeichnet, daß die Zustandsgrößen (Uₚ, U 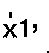 , Uₓ₁ ... Uₓₙ) der Regelstrecke bzw. deren gewichtete Signale im Sinne einer Gegenkopplung in der Verknüpfungsschaltung (31) verarbeitet werden.

3. Regeleinrichtung nach Anspruch 1 oder 2, dadurch gekennzeichnet, daß alle erforderlichen Zustandsgrößen, das heißt das Lagesignal (Uₓ₁) und das Geschwindigkeitssignal (U 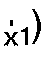 ) für die erste Ventilstufe und gegebenenfalls weitere Lagesignale (Uₓ₂ ... Uₓₙ) für weitere Stufen durch an sich bekannte Meßaufnehmer und Signalumsetzer ermittelt werden.

4. Regeleinrichtung nach Anspruch 1 oder 2, dadurch gekennzeichnet, daß nur ein Teil der erforderlichen Zustandsgrößen durch Messung ermittelt werden und der andere Teil über einen Beobachter (34) rechnerisch ermittelt wird.

5. Regeleinrichtung nach Anspruch 4, dadurch gekennzeichnet, daß alle erforderlichen Zustandsgrößen nur aus dem Drucksignal (Uₚ) mit Hilfe eines Beobachters (33) ermittelt werden.

6. Regeleinrichtung nach einem der Ansprüche 1 bis 5, dadurch gekennzeichnet, daß das Geschwindigkeitssignal (U 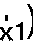 ) durch Differenzieren (Differenzierglied 35) des entsprechenden Lagesignals ermittelt wird.

7. Regeleinrichtung nach Anspruch 1 oder 2, wobei in an sich bekannter Weise der Lageregler für die erste Ventilstufe einen PID-Regler enthält, dessen Proportionalglied und Integrierglied eingangsseitig verbunden sind und den Sollwerteingang des PID-Reglers bilden, das Lagesignal der ersten Ventilstufe als Istwertsignal dem Proportional-, Integral- und Differenzierglied zugeführt ist und dessen Reglerausgang die Lage der ersten Ventilstufe steuert, dadurch gekennzeichnet, daß das Lagesignal (Uₓ₁) der ersten Ventilstufe zusätzlich dem Zustandsregler (29) und das am Ausgang des Differenziergliedes auftretende Signal als Geschwindigkeitssignal (U 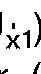 ) der ersten Ventilstufe dem Zustandsregler (29) als Zustandsgrößensignale zugeführt sind und daß der Sollwerteingang des PID-Reglers mit dem Ausgang des Zustandreglers (29) bzw. der Verknüpfungsschaltung (31) verbunden ist.

8. Regeleinrichtung nach Anspruch 7, dadurch gekennzeichnet, daß zwischen dem Sollwerteingang des PID-Reglers und dem Ausgang des Zustandreglers (29) eine Reglerstufe (37) eingeschaltet ist, der die Lagesignale (Uₓ₂ ... Uₓₙ) von gegebenenfalls weiteren Ventilstufen zu deren unmittelbarer Verarbeitung in der Lageregelung zugeführt sind und daß diese Lagesignale (Uₓ₂ ... Uₓₙ) zusätzlich dem Zustandsregler als Zustandsgrößensignale zugeführt werden.

## Claims

1. Regulating device for a pressure-regulating circuit, with a position-regulated, at least single-stage, continuously adjustable valve, with a consumer which is connected to the valve and the pressure of which is to be regulated, with a pressure transducer on the consumer for generating a pressure actual-value signal, and with a controller, to which the pressure actual-value signal and a pressure desired-value signal are fed and the output of which is connected to the regulating input of the position-regulated valve, characterised in that the controller is designed as a state controller (29), to which are fed the pressure desired-value signal (U_{des}) and, as state quantities of the controlled system, the pressure actual-value signal (Uₚ) and, furthermore, a position or setting signal (Uᵥ or Uₓ₁) as well as a speed signal (U 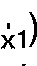 ) for a variation in position of the first valve stage and, if appropriate, a position signal (Uₓ₂...Uₓₙ) for any further stage respectively, in that at least a part of these signals (U_{des}, Uₚ, U 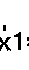 , Uₓ₁...Uₓₙ) is connected to weighting circuits (K_{w}, K₁...Kₙ₊₂), in order to weight the signals (U_{des}, Uₚ, U 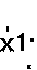 ...Uₓₙ) relative to one another, in that these signals (U_{des}, Uₚ, U 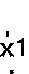 , Uₓ₁...Uₓₙ) or the signals weighted via the weighting circuits (K_{w}, K₁...Kₙ₊₂) are fed to a logic circuit (31), and in that the output of the logic circuit (31) is connected as an output of the state controller (29) to the regulating input of the position-regulated valve (2).

2. Regulating device according to Claim 1, characterised in that the state quantities (Uₚ, U 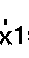 , Uₓ₁...Uₓₙ) of the controlled system or their weighted signals are processed in the logic circuit (31) with the effect of a negative feedback.

3. Regulating device according to Claim 1 or 2, characterised in that all the necessary state quantities, that is to say the position signal (Uₓ₁) and the speed signal (U 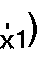 ) for the first valve stage and, if appropriate, further position signals Uₓ₂...Uₓₙ) for further stages are determined by measuring transducers and signal converters known per se.

4. Regulating device according to Claim 1 or 2, characterised in that only part of the necessary state quantities are determined by measurement and the other part is determined arithmetically via an observer (34).

5. Regulating device according to Claim 4, characterised in that all the necessary state quantities are determined solely from the pressure signal (Uₚ) by means of an observer (33).

6. Regulating device according to one of Claims 1 to 5, characterised in that the speed signal (U 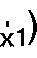 ) is determined by differentiating (differentiating element 35) the corresponding position signal.

7. Regulating device according to Claim 1 or 2, in which, in a way known per se, the position controller for the first valve stage contains a PID controller, of which the proportional element and integrating element are connected on the input side and form the desired-value input of the PID controller, the position signal of the first valve stage being fed as an actual-value signal to the proportional, integral and differentiating element, and the controller output of which controls the position of the first valve stage, characterised in that, as state-quantity signals, the position signal (Uₓ₁) of the first valve stage is fed additionally to the state controller (29) and the signal occurring at the output of the differentiating element is fed as a speed signal (U 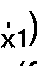 ) of the first valve stage to the state controller (29), and in that the desired-value input of the PID controller is connected to the output of the state controller (29) or of the logic circuit (31).

8. Regulating device according to Claim 7, characterised in that there is inserted between the desired-value input of the PID controller and the output of the state controller (29) a controller stage (37), to which the position signals (Uₓ₂...Uₓₙ) from, if appropriate, further valve stages are fed for their direct processing in the position control, and in that these position signals (Uₓ₂...Uₓₙ) are additionally fed as state-quantity signals to the state controller.

## Revendications

1. Régulateur pour un circuit de régulation de pression comportant un distributeur à réglage continu à au moins un étage, régulé en position, un utilisateur relié à ce distributeur et dont-il faut régler la pression, un capteur de pression équipant l'utilisateur pour générer un signal de valeur réelle de pression et un régulateur qui reçoit le signal de valeur réelle de pression et un signal de valeur de consigne de pression et dont la sortie est reliée à l'entrée de régulation du distributeur régulé en position, régulateur caractérisé en ce qu'il est réalisé comme régulateur d'état (29) recevant le signal de valeur de consigne de pression (U_{cons}) et comme grandeurs d'état du chemin de régulation, le signal de valeur réelle de pression (Uₚ) et en outre un signal de position ou de réglage (Uᵥ ou Uₓ₁) ainsi qu'un signal de vitesse (U 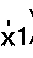 ) pour une variation de position du premier étage du distributeur et le cas échéant un signal de position (Uₓ₂ ... Uₓₙ) pour chaque autre étage, et en ce qu'au moins une partie de ces signaux (U_{cons}, Uₚ, U 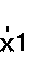 , Uₓ₁ ... Uₓₙ) sont appliqués à des circuits de pondération (k_{w}, K₁ ... Kₙ₊₂) pour pondérer réciproquement les signaux (U_{cons}, Uₚ, U 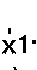 ... Uₓₙ), ces signaux (U_{cons}, Uₚ, U 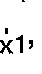 , Uₓ₁ ... Uₓₙ) ou les signaux pondérés par les circuits de pondération (k_{w}, K₁ ... Kₙ₊₂) étant appliqués à un circuit de combinaison (31) dont la sortie est appliquée comme sortie du régulateur d'état (29) à l'entrée de régulation du distributeur (2) régulé en position.

2. Installation de régulation selon la revendication 1, caractérisée en ce que les grandeurs d'état (Uₚ, U 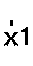 , Ux1 ... Uₓₙ) du chemin de régulation ou ses signaux pondérés sont traités dans le sens d'une contre-réaction dans le circuit de combinaison (31).

3. Régulateur selon la revendication 1 ou 2, caractérisé en ce que toutes les grandeurs d'état, nécessaires, c est-à-dire le signal de position (Uₓ₁) et le signal de vitesse (U 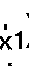 ) du premier étage de distributeur et le cas échéant d'autres signaux de position (Uₓ₂ ... Uₓₙ) pour d'autres étages sont déterminés par des capteurs de mesure et des convertisseurs de signaux connus en soi.

4. Régulateur selon la revendication 1 ou 2, caractérisé en ce que seulement une partie des grandeurs d'état nécessaires se détermine par mesure et l'autre partie se détermine par le calcul à l'aide d'un observateur (34).

5. Régulateur selon la revendication 4, caractérisé en ce que toutes les grandeurs d'état nécessaires sont déterminées uniquement par un observateur (33) à partir du signal de pression (Uₚ).

6. Régulateur selon l'une des revendications 1 à 5, caractérisé en ce que le signal de vitesse (U 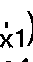 ) se détermine par différentiation (élément différentiateur 35) du signal de position correspondant.

7. Régulateur selon la revendication 1 ou 2 dans lequel le régulateur de position connu en soi pour le premier étage de distributeur comporte un régulateur PID dont l'élément proportionnel et l'élément intégral sont reliés par leur entrée et forment l'entrée de la valeur de consigne du régulateur PID, le signal de position du premier étage de distributeur est appliqué comme signal de valeur réelle à l'élément proportionnel à l'élément intégral et à l'élément différentiateur et dont la sortie de régulation commande la position du premier étage de distributeur, régulateur caractérisé en ce que le signal de position (Uₓ₁) du premier étage de régulateur est en outre appliqué au régulateur d'état (29) et en ce que le signal de sortie de l'élément différentiateur est appliqué comme signal de vitesse (U 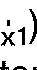 ) du premier étage de distributeur au régulateur d'état (29) comme signal de grandeur d'état et en ce que l'entrée de la valeur de consigne du régulateur PID est relié à la sortie du régulateur d'état (29) ou du circuit de combinaison (31).

8. Régulateur selon la revendication 7, caractérisé en ce qu'un étage de régulateur (37) est prévu entre l'entrée de la valeur de consigne du régulateur PID et la sortie du régulateur d'état (29), cet étage recevant les signaux de position (Uₓ₂ ... Uₓₙ), le cas échéant d'autres étages de distributeur pour traiter directement ces signaux dans la régulation de position et en ce que ces signaux de position (Uₓ₂ ... Uₓₙ) sont en outre appliqués comme signaux de grandeurs d'état au régulateur d'état.
